# EUROPEAN PATENT SPECIFICATION

(11) **EP 2 784 396 B1**
(45) Date of publication and mention of the grant of the patent: **19.04.2017**
(21) Application number: 13161272.3
(22) Date of filing: 27.03.2013
(51) Int. Cl.: H05B 6/12, F24C 7/06, F24C 15/10, H05B 3/74

(54) **Cooking hob**
Kochfeld
Plaque de cuisson

(43) Date of publication of application: 01.10.2014
(73) Proprietor: Whirlpool Corporation, Benton Harbor, MI 49022 (US)
(72) Inventor: Leonardi, Luca, 21025 Comerio (IT); Ballabio, Davide, 21025 Comerio (IT)
(74) Representative: Guerci, Alessandro

(56) References cited:
- EP-A1- 2 436 989
- EP-A2- 1 182 369
- DE-A1- 2 301 928
- DE-A1- 10 306 813
- DE-A1- 19 721 776
- DE-A1-102005 007 594
- GB-A- 2 274 497
- US-A- 2 169 182
- US-A- 2 831 388
- US-A- 5 001 328

## Description

The present invention relates to a cooking hob comprising a bottom panel, an upper plate and at least a heating element interposed between the bottom panel and the upper plate, elastic means being interposed between the bottom panel and the heating element for urging this latter against the upper plate.

The top panel of the above kind of cooking hobs is usually made of vitroceramic material, known also as "glass plate". For assuring a mutual contact between the heating elements and the upper glass plate, a heater support spring is coupled to the heater so that such spring is interposed between the bottom panel (usually a metal sheet lower portion of a box containing the heaters) and the heaters. Such solution is disclosed for instance by DE 3204760, WO 2007/133003 and EP 2144008.

US 5001328 **discloses a cooking unit with radiant heaters where a peripheral frame with leg bottom portions has spring elements integral with such leg portions for urging the heaters against an upper plate.**

Other known solutions use the whole bottom panel as an elastic body, by allowing a certain degree of deflection thereof, preferably in correspondence with embossed portion of the bottom panel or box. Such known solutions do not allow a control either of the deformation of the panel or of the force exerted on the heater sandwiched between the panel and the upper glass. The uncertainty of the actual value of such elastic force may lead to glass deformation or rupture.

It is an object of the present invention to provide a cooking hob of the type mentioned at the beginning of the description which does not present the above disadvantages, has a lower cost compared to commercial hobs and can be manufactured in a simplified way and with a reduced number of components.

This object is reached thanks to the features listed in the appended claims.

According to the invention, by cutting the bottom panel according to a predetermined shape, it is possible to define a shaped strip of the bottom panel which, after a predetermined upward deformation, has the function of a spring integral with the bottom panel and localized in a predetermined zone thereof.

According to a preferred feature of the invention, the bottom panel is cut along a helicoidal slot so that the deformed strip acts as a coil spring.

Further advantages and features according to the present invention will become clear from the following detailed description, given only as a non limited example, with reference to the attached drawings in which:
- Figure 1 is a perspective view of a component of the cooking hob according to the invention;
- Figure 2 is an enlarged detail II of figure 1;
- Figure 3 is a perspective view similar to figure 1 and showing a second embodiment which is not part of the invention.
- Figure 4 s an enlarged view of a detail IV of figure 3;
- Figure 5 is a top view of the detail of figure 2;
- Figure 6 is atop view of the component of figure 1;
- Figure 7 is a section taken along the line VII-VII of figure 6 where heaters and top glass plate are shown as well; and
- Figure 8 is a top view of the component of figure 3.

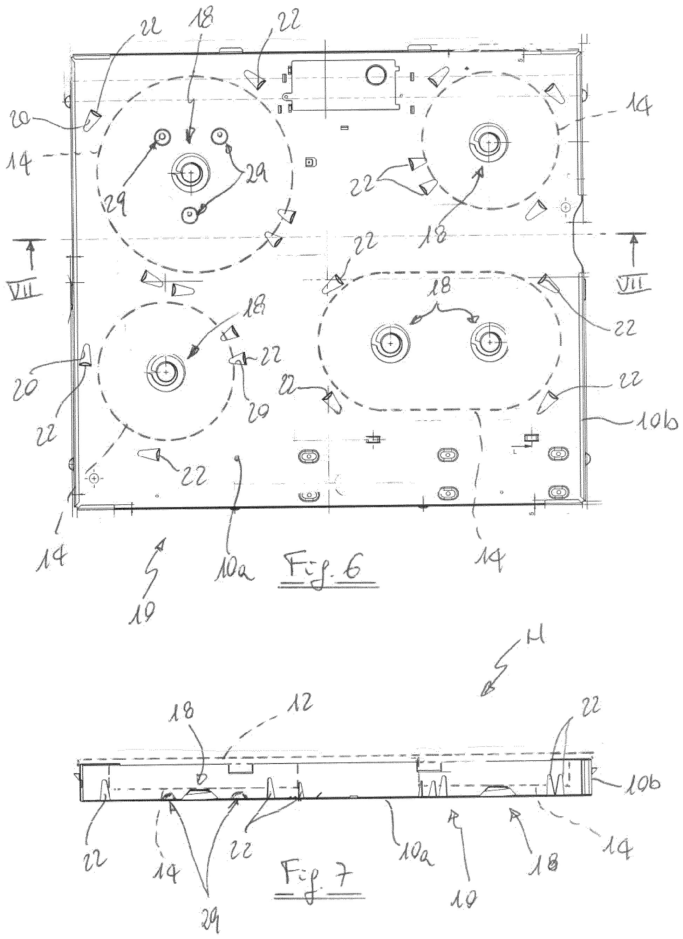

With reference to the drawings, with 10 is shown a bottom panel of a cooking hob H (figure 7) made of metal sheet. The bottom panel 10 comprises a bottom flat portion 10a and an angled lateral edge 10b which defines, together with a top glass plate 12, a sort of a box in which a plurality of heaters 14 are contained. The top plate 12 and the bottom panel 10 can be connected in different ways, and since this kind of known connection is not relevant with regard to the present invention, it will not be described here in detail.

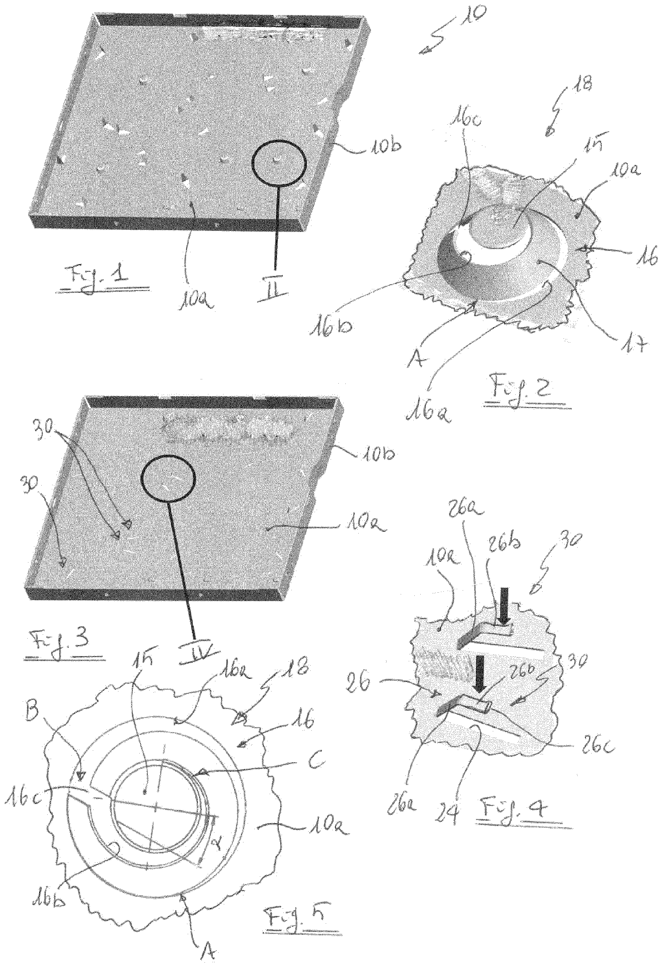

With reference to figures 1, 2, 5, 6 and 7, according to a first embodiment of the invention the bottom panel 10 comprises helicoidal slots 16 which define conical springs 18 adapted to urge the heaters 14 against the top glass plate 12 (configuration shown in figure 7).

In the process for obtaining conical springs 18, the metal sheet of the bottom panel 10 is firstly cut along a helicoidal slot, preferably by means of a laser beam. As shown in figure 5, a first portion 16a of the slot starts at A and ends at B and a second portion 16b starts at B and ends at C. The two portions 16a and 16b are linked by a Z-shaped portion 16c whose central part is substantially radially directed, with a certain angle α with reference to radial direction. Such angle α is comprised between 10° and 30°, preferably around 20°. After the above slot 16 is cut, the slotted portion undergoes a process of metal drawing/stamping in which the metal sheet is deformed in a mould so that a strip zone 17 inside the first portion 16a of the slot 16 assume a conical and helicoidal shape and a circular zone 15 inside the second portion 16b of the strip 16 maintains its original flat configuration. Of course the process of cutting the slot and shaping the zone thereof can be carried out in a single shot as well. The configuration of the final conical spring 18 is shown in detail in figure 5, where the helical slot 16 is widened after the metal drawing/stamping.

With an overall diameter of the helicoidal slot 16 comprised between 35 and 45 mm, preferably around 40 mm, and with a thickness of the carbon steel sheet between 0,6 and 0,8 mm, the force that the spring 18 can exert is of the order of 10-20 N for an elastic vertical movement of about 3-4 mm, i.e. more than sufficient for assuring a good and permanent contact between the heaters 14 and the glass top plate 12. As shown in the lower right portion of figure 6, for a single heater 14 two or more springs 18 can be used.

As it is clearly shown in figure 6, for ensuring that the heaters 14 are centered on their respective conical springs 18 the bottom plate 10 is provided with auxiliary U-shaped elongated slots 20 which define a plurality of strips 22 which are bent upward in order to define a predetermined zone where each heater has to be placed. Some of such bent strips 22 can be used in cooperation with electrical terminals (not shown) of the heaters 14 in order to position correctly the heaters 14 and to avoid rotation thereof during the assembly of the cooking hob.

With reference to figures 3, 4 and 8 a second embodiment which is not part of the invention is shown in which U-shaped slots 24 of the bottom panel 10 define metal strips 26 which are permanently and upwardly deformed so that each of them presents a first slanted portion 26a stemming from the metal sheet and a second elongated portion 26b which is substantially parallel to the metal sheet of the bottom panel 10. Each shaped metal strip 26 defines therefore a leaf spring 30 integral with the bottom panel 10 which cooperates with an edge portion of the heater 14 in order to urge it against the top glass plate 12. Such leaf springs 30 act also as centering means, particularly because each end 26c of each second elongated portion 26b of the metal strip 26 is bent upward. So, differently from the first embodiment where a single conical spring 18 is enough for each heater 14, in the second embodiment for each heater 14 at least three leaf springs 30 are necessary for each heater 14.

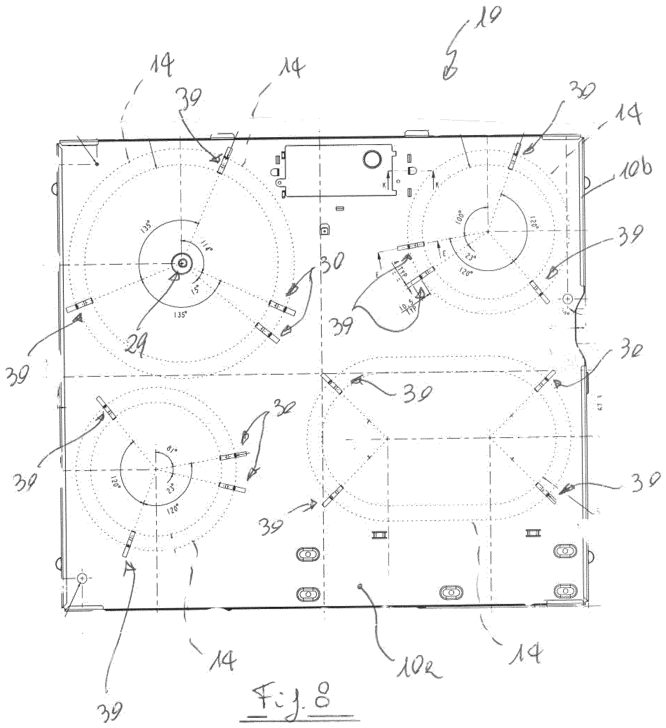

In both the above embodiments it is possible to create, preferably in a zone around the springs, some embossed surfaces which prevent the springs from being deformed in a non elastic range during the assembly of the cooking hob. Such embossed surfaces (shown in the upper right portion only of figures 6 and 8 and referred to with reference numeral 29) act as a limit stop for the springs so that they can work only in a elastic stress-strain relation.

From the above description is clear how the overall construction of the cooking hob is simplified, either because the number of components is reduced or because it is not necessary to mount any spring clips since these latter are fully integrated with the metal box containing the heaters.

The solution according to the invention is totally independent on the types of heaters that are used in the cooking hob, either radiant heating elements or induction heating elements. Moreover even if a conical shape of the embossed spring has been shown in connection with the first embodiment, other shapes can be used as well, for instance integral springs with a pyramid shape, either with a square or polygonal base. Similarly, in the second embodiment the strips 26 can have a shape different from the rectilinear one, for instance L-shaped strips or curved strips.

The material and the thickness of the bottom panel 10 are not critical in so far these features are compatible with the range of elastic force that the integral spring has to exert on the heater. We deem that a person skilled in the art of metal drawing will have no problem in combining thickness and material in order to obtain the elastic force requested for each particular application.

## Claims

1. Cooking hob (H) comprising a bottom panel (10), an upper plate (12) and at least a heating element (14) interposed between the bottom panel (10) and the upper plate (12), elastic means being interposed between the bottom panel (10) and the heating element (14) for urging this latter against the upper plate (12), said elastic means (18) being integral with the bottom panel (10), **characterized in that** said elastic means comprises a helicoidal slot (16) in the bottom panel (10) where a portion (17) of the panel (10) defined by said helicoidal slot (16) is shaped upward in order to define a spring element (18).

2. Cooking hob according to claim 1, wherein said spring element (18) has a frustum of cone shape.

3. Cooking hob according to claim 2, wherein said helicoidal slot (16) presents a first portion (16a) comprised between the bottom panel (10) and a conical zone (17) of the spring element (18) and a second portion (16b) comprised between said conical zone (17) and an upper zone (15) of the spring element (18), said two portions (16a, 16b) of the helicoidal slot (16) being linked by a substantially radial portion (16c).

4. Cooking hob according to claim 3, wherein said substantially radial portion (16c) of the helicoidal slot (16) presents an angle (α) comprised between 10° and 30° with reference to radial direction.

5. Cooking hob according to claim 3 or 4, wherein the helicoidal slot (16) has an upper end (C) at whose level a flat circular upper zone (15) of the spring element (18) is placed and it is adapted to abut the heating element (14).

6. Cooking hob according to any of claims 1-5, wherein the spring element (18) has an overall diameter comprised between 35 and 45 mm, and it can exert an elastic force comprised between 10 and 20 N.

7. Cooking hob according to any of claims 1-6, wherein the bottom panel (10, 10a) comprises auxiliary U-shaped slots (20) where a portion of the bottom panel (10) defined by said auxiliary slots is bent upward in order to define finger-shaped portions (22) adapted to center the heating element (14) on said spring elements (18)

8. Method for producing a cooking hob according to claim 1, **characterized in that** the elastic means is defined by cutting the bottom panel (10) in order to define at least a helicoidal slot (16) and by deforming upward a portion (17) of the bottom panel (10) defined by said slot and integral with the bottom panel (10).

9. Method according to claim 8, wherein said bottom panel (10) is cut by a laser beam.

10. Method according to claim 8 or 9, wherein the bottom panel (10) inside said slot (16) is shaped so that is assume a conical shape.

## Patentansprüche

1. Kochfeld (H), das eine Bodenplatte (10), eine obere Platte (12) und mindestens ein Heizelement (14), das zwischen der Bodenplatte (10) und der oberen Platte (12) angeordnet ist, umfasst, wobei elastische Mittel zwischen der Bodenplatte (10) und dem Heizelement (14) angeordnet sind, um Letzteres gegen die obere Platte (12) zu drängen, wobei die elastischen Mittel (18) einstückig mit der Bodenplatte (10) ausgebildet sind,
**dadurch gekennzeichnet, dass** die elastischen Mittel einen spiralförmigen Schlitz (16) in der Bodenplatte (10) umfassen, wobei ein Abschnitt (17) der Bodenplatte (10), der durch den spiralförmigen Schlitz (16) definiert ist, ansteigend geformt ist, um ein Federelement (18) zu definieren.

2. Kochfeld nach Anspruch 1, wobei das Federelement (18) einen kegelförmigen Stumpf aufweist.

3. Kochfeld nach Anspruch 2, wobei der spiralförmige Schlitz (16) einen ersten Abschnitt (16a), der zwischen der Bodenplatte (10) und einem konischen Bereich (17) des Federelements (18) eingeschlossen ist, und einen zweiten Abschnitt (16b), der zwischen dem konischen Bereich (17) und einem oberen Bereich (15) des Federelements (18) eingeschlossen ist, aufweist, wobei die zwei Abschnitte (16a, 16b) des spiralförmigen Schlitzes (16) durch einen im Wesentlichen radialen Abschnitt (16c) verbunden sind.

4. Kochfeld nach Anspruch 3, wobei der im Wesentlichen radiale Abschnitt (16c) des spiralförmigen Schlitzes (16) einen Winkel (α) aufweist, der zwischen 10° und 30° bezogen auf eine radiale Richtung umfasst.

5. Kochfeld nach Anspruch 3 oder 4, wobei der spiralförmige Schlitz (16) ein oberes Ende (C) aufweist, an dessen Höhe ein kreisförmiger oberer Bereich (15) des Federelements (18) angeordnet ist und das dafür ausgelegt ist, an dem Heizelement (14) anzuliegen.

6. Kochfeld nach einem der Ansprüche 1-5, wobei das Federelement (18) einen Gesamtdurchmesser, der zwischen 35 und 45 mm umfasst, aufweist und es eine Federkraft ausüben kann, die zwischen 10 und 20 N umfasst.

7. Kochfeld nach einem der Ansprüche 1-6, wobei die Bodenplatte (10, 10a) zusätzliche U-förmige Schlitze (20) umfasst, wobei ein Abschnitt der Bodenplatte (10), der durch die zusätzlichen Schlitze definiert ist, nach oben gebogen ist, um fingerförmige Abschnitte (22) zu definieren, die dafür ausgelegt sind, das Heizelement (14) mittig auf den Federelementen (18) auszurichten.

8. Verfahren zum Herstellen eines Kochfelds nach Anspruch 1, **dadurch gekennzeichnet, dass** die elastischen Mittel durch Schneiden der Bodenplatte (10), um mindestens einen spiralförmigen Schlitz (16) zu definieren, und durch Verformen eines Abschnitts (17) der Bodenplatte (10) nach oben, der durch den Schlitz definiert und einstückig mit der Bodenplatte (10) ausgebildet ist, definiert sind.

9. Verfahren nach Anspruch 8, wobei die Bodenplatte (10) durch einen Laserstrahl geschnitten wird.

10. Verfahren nach Anspruch 8 oder 9, wobei die Bodenplatte (10) innerhalb des Schlitzes (16) so geformt ist, dass sie eine konische Form annimmt.

## Revendications

1. Table de cuisson (H) comprenant un panneau inférieur (10), une plaque supérieure (12) et au moins un élément chauffant (14) interposé entre le panneau inférieur (10) et la plaque supérieure (12), un moyen élastique étant interposé entre le panneau inférieur (10) et l'élément chauffant (14) pour pousser ce dernier contre la plaque supérieure (12), ledit moyen élastique (18) étant d'un seul tenant avec le panneau inférieur (10), **caractérisé en ce que** ledit moyen élastique comprend une fente hélicoïdale (16) dans le panneau inférieur (10) où une portion (17) du panneau (10) définie par ladite fente hélicoïdale (16) est mise en forme vers le haut afin de définir un élément formant ressort (18).

2. Table de cuisson selon la revendication 1, dans laquelle ledit élément formant ressort (18) a une forme de tronc de cône.

3. Table de cuisson selon la revendication 2, dans laquelle ladite fente hélicoïdale (16) présente une première portion (16a) comprise entre le panneau inférieur (10) et une zone conique (17) de l'élément formant ressort (18) et une seconde portion (16b) comprise entre ladite zone conique (17) et une zone supérieure (15) de l'élément formant ressort (18), lesdites deux portions (16a, 16b) de la fente hélicoïdale (16) étant liées par une portion sensiblement radiale (16c).

4. Table de cuisson selon la revendication 3, dans laquelle ladite portion sensiblement radiale (16c) de la fente hélicoïdale (16) présente un angle (α) compris entre 10° et 30° en se référant à une direction radiale.

5. Table de cuisson selon la revendication 3 ou 4, dans laquelle la fente hélicoïdale (16) a une extrémité supérieure (C) au niveau de laquelle une zone supérieure circulaire plate (15) de l'élément formant ressort (18) est placée et elle est conçue pour être contiguë à l'élément chauffant (14).

6. Table de cuisson selon l'une quelconque des revendications 1 à 5, dans laquelle l'élément formant ressort (18) a un diamètre global compris entre 35 et 45 mm, et il peut exercer une force élastique comprise entre 10 et 20 N.

7. Table de cuisson selon l'une quelconque des revendications 1 à 6, dans laquelle le panneau inférieur (10, 10a) comprend des fentes auxiliaires en forme de U (20) où une portion du panneau inférieur (10) définie par lesdites fentes auxiliaires est pliée vers le haut afin de définir des portions en forme de doigt (22) conçues pour centrer l'élément chauffant (14) sur lesdits éléments formant ressorts (18).

8. Procédé pour produire une table de cuisson selon la revendication 1, **caractérisé en ce que** le moyen élastique est défini en découpant le panneau inférieur (10) afin de définir au moins une fente hélicoïdale (16) et en déformant vers le haut une portion (17) du panneau inférieur (10) définie par ladite fente et d'un seul tenant avec le panneau inférieur (10).

9. Procédé selon la revendication 8, dans lequel ledit panneau inférieur (10) est découpé par un faisceau laser.

10. Procédé selon la revendication 8 ou 9, dans lequel le panneau inférieur (10) à l'intérieur de ladite fente (16) est mis en forme de sorte qu'il prend une forme conique.
